# EUROPEAN PATENT APPLICATION

(11) **EP 2 732 972 A1**
(43) Date of publication of application: **21.05.2014**
(21) Application number: 12811379.2
(22) Date of filing: 09.07.2012
(51) Int. Cl.: B32B 27/32, B32B 27/36, B65D 33/38, B65D 65/40

(54) **PLASTIC FILM AND INFUSION SOLUTION BAG**

(30) Priority: 12.07.2011 JP 2011154050
(71) Applicant: Hosokawa Yoko Co., Ltd., Tokyo 102-0084 (JP)
(72) Inventor: IWASAKI Toshiharu, Tokyo 102-0084 (JP); NAKAMURA Manabu, Tokyo 102-0084 (JP); KAGEYAMA Yohei, Tokyo 102-0084 (JP)
(74) Representative: Wallinger, Michael
(86) International application number: PCT/JP2012/067465
(87) International publication number: WO 2013/008780

(57) **Abstract**

A plastic film according to the present invention includes a first outer layer made of a polyester elastomer; a second outer layer containing a high-density polyethylene; a first intermediate layer arranged between the first outer layer and the second outer layer and containing a linear low-density polyethylene as a main component; and a second intermediate layer arranged between the first outer layer and the first intermediate layer and containing a polymer of an α-olefin and an unsaturated carboxylic acid or an anhydride monomer of an unsaturated carboxylic acid as a main component. The plastic film can be produced by a co-extrusion method.

## Description

### Technical Field

The present invention relates to a plastic film used in medical containers, and an infusion solution bag using the same.

Priority is claimed on Japanese Patent Application No. 2011-154050, filed July 12, 2011, the content of which is incorporated herein by reference.

### Background Art

As medical containers such as bags for infusion solutions, medial solutions, or the like, glass containers and soft bags which are made using polyethylene, polypropylene, polyvinyl chloride, or the like by blow molding or heat sealing have been used. Among them, since such soft bags are light-weight, have small volumes when the bags are disposed, and even do not require ventilation needles during administration, the soft bags have become the mainstream of medical containers.

Generally, films used in the soft bags are entirely made of polyolefin materials such as polyethylene, polypropylene, or the like to reduce eluted materials in steam autoclaving, and to maintain transparency and flexibility. Since the polyolefin materials are easily melted by external heating, deterioration in quality such as a reduction in transparency, a reduction in film thickness, crinkle formation, or the like due to external heating easily occurs. Therefore, the process of bag making by external heating such as heat sealing or the like is carried out by partially melting the polyolefin material in a careful manner with time so as not to deteriorate the film.

In order to alleviate deterioration in quality due to external heating in the steam autoclaving and the process of bag making, there have been disclosed techniques in which a material more excellent in heat resistance than the polyolefin materials is disposed as an outer layer.

For example, Patent Document 1 discloses a film including a first outer layer containing an ethylene/α-olefin copolymer having a density of less than 0.916 g/cc and a melting peak temperature of higher than 118°C, a second outer layer containing a polymer material selected from polyester, copolyester (polyester copolymer), polyamide and polyolefin, and a layer arranged between the first outer layer and the second outer layer and containing an α-olefin/unsaturated monomer copolymer. Patent Document 1 also discloses a description of the film formation by a cast co-extrusion, and actually, discloses an example in which the film is produced by a cast co-extrusion molding using a T-die.

### Document of Related Art

### Patent Document

[Patent Document 1] Published Japanese Translation No. 2002-524308 of the PCT International Publication

### Summary of Invention

### Technical Problem

However, when a tubular film was produced by a water-cooling co-extrusion inflation method using the film disclosed in Patent Document 1 such that a first outer layer becomes an inner surface, it was found that the inner surfaces were in tight contact with each other and blocking easily occurred during rolling of the tubular film.

When the inner surfaces of the blocked tubular film are separated, the inner surfaces are easily whitened.

In addition, in the case where the aforementioned tubular film is formed into a bag, when it is attempted to fill the bag with a content, the bag cannot be opened and filled with the content in some cases.

Further, when the bag is sterilized by heat after the bag is filled with the content, the inner surfaces of the bag are partially welded, and cannot be peeled in some cases.

In this manner, the technique disclosed in Patent Document 1 has an alleviation measure for deterioration in quality due to external heating. However, there is a problem of deterioration in blocking resistance.

Here, an object of the present invention is to provide a plastic film in which deterioration in quality is suppressed and blocking resistance is excellent, and to provide an infusion solution bag.

### Solution to Problem

According to an aspect of the present invention, a plastic film is provided including: a first outer layer made of a polyester elastomer; a second outer layer containing a high-density polyethylene; a first intermediate layer arranged between the first outer layer and the second outer layer and containing a linear low-density polyethylene as a main component; and a second intermediate layer arranged between the first outer layer and the first intermediate layer and containing a polymer of an α-olefin and an unsaturated carboxylic acid or an anhydride monomer of an unsaturated carboxylic acid as a main component, in which the plastic film is produced by a co-extrusion method.

The polyester elastomer of the first outer layer is preferably an alicyclic polyester. The first intermediate layer preferably contains the high-density polyethylene in a content less than or equal to 40% by mass. The second outer layer is preferably a mixture of a high-density polyethylene and a linear low-density polyethylene and contains the linear low-density polyethylene in a content of less than or equal to 50% by mass. The second outer layer is preferably a mixture of 20 to 40% by mass of high-density polyethylene, 10 to 30% by mass of linear low-density polyethylene, 70 to 30% by mass of low-density polyethylene.

According to another aspect of the present invention, there is provided an infusion solution bag including a bag body made of the plastic film, in which a spout is provided in the bag body.

### Effects of Invention

According to the plastic film of the present invention, deterioration in the quality of the plastic film is suppressed and blocking resistance is improved.

### Brief Description of Drawings

FIG. 1 is a cross-sectional view of a plastic film according to an embodiment of the present invention.
FIG. 2 is a plan view of an infusion solution bag according to another embodiment of the present invention.

### Description of Embodiments

### (Plastic Film)

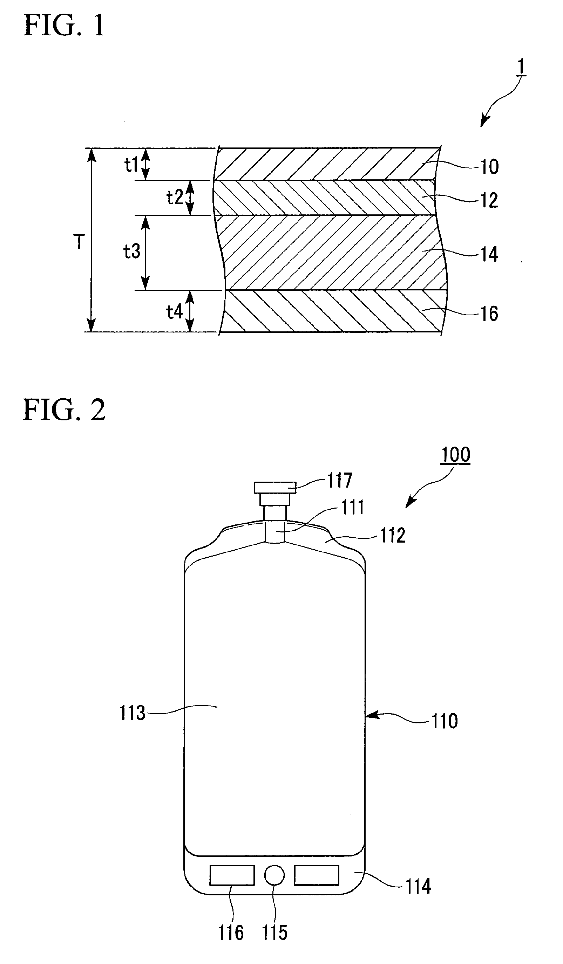

A plastic film according to an embodiment of the present invention will be described with reference to FIG. 1 below. A plastic film 1 in FIG. 1 includes a first outer layer 10, a second intermediate layer 12, a first intermediate layer 14, and a second outer layer 16, which are sequentially laminated.

### <First Outer Layer>

The first outer layer 10 is a layer which is an outermost layer of a container when the plastic film 1 is formed into a bag-shaped container, and which has the highest temperature when the plastic film 1 is subjected to external heating in a heat sealing process. In the heat sealing process, the plastic films 1 are welded and the plastic film 1 and a port or a tube which is a spout member for discharging a medicinal solution and made of a synthetic resin molding product are welded, to the second outer layer 16.

The first outer layer 10 is made of a polyester elastomer. The polyester elastomer is a polyester-based thermoplastic elastomer made of dibasic acid derived units and dihydric alcohol derived units, and is a polyester ether block copolymer having a hard segment and a soft segment.

Examples of the polyester ether include those described in the Encyclopedia of Polymer Science and Engineering, Second edition, Vol. 12, P 75 to 115, published in 1985.

As the dibasic acid used in the polyester elastomer, there may be aromatic or aliphatic dicarboxylic acids or dimethyl esters thereof. Examples thereof include aromatic dicarboxylic acids such as terephthalic acid, isophthalic acid, naphthalene-2,6-dicarboxylic acid, anthracene dicarboxylic acid, diphenyl-4,4'-dicarboxylic acid, diphenoxy ethane dicarboxylic acid and 4,4'-diphenyl ether dicarboxylic acid, alicyclic dicarboxylic acids such as 1,4-cyclohexane dicarboxylic acid, cyclopentane dicarboxylic acid and 4,4'-dicyclohexyl dicarboxylic acid, and aliphatic dicarboxylic acids such as adipic acid, succinic acid, oxalic acid, sebacic acid, dodecanedioic acid and dimer acid.

Examples of the dihydric alcohol used in the polyester elastomer include aliphatic diols such as ethylene glycol, trimethylene glycol, 1,4-butanediol, pentamethylene glycol, hexamethylene glycol, neopentyl glycol and decamethylene glycol, alicyclic diols such as 1,1-cyclohexanedimethanol, 1,4-dicyclohexanedimethanol and tricyclodecanedimethanol, aromatic diols such as xylylene glycol, bis(p-hydroxy)diphenyl and bis(p-hydroxy)diphenylpropane, and poly(alkylene glycol ether)s such as poly(ethylene oxide), poly(propylene oxide), poly(tetramethylene oxide) and copolymers thereof.

Among these dibasic acids and dihydric alcohols, the polyester elastomer including units derived from an aromatic compound having an aromatic ring may not satisfy the specification of ultraviolet absorption spectrum in the specifications of the elution test of the Japanese Pharmacopoeia which is required for the use of medical containers in some cases. Therefore, as the polyester elastomer, a polyester elastomer which does not contain an aromatic compound is preferable. Further, alicyclic polyesters which are polyester elastomers including units derived from an alicyclic compound are preferable since the alicyclic polyesters do not contain an aromatic compound and have high heat resistance. Among the alicyclic polyesters, an alicyclic polyester containing a large amount of an alicyclic compound and made of 1,4-cyclohexane dicarboxylic acid, 1,4-dicyclohexanedimethanol and poly(alkylene glycol ether)s is more preferable.

A method of producing a polyester elastomer is not particularly limited, and production methods in the related art can be used.

Examples of commercially available products of the polyester elastomer include HYTREL 4767 (trade name, manufactured by DU PONT-TORAY CO.,LTD.) including units derived from an aromatic compound, and ECDEL 9966 (trade name, manufactured by Eastman Chemical Co., Ltd.) which is an alicyclic polyester.

The thickness t1 of the first outer layer 10 is preferably 2 to 15% with respect to the thickness (total thickness) T of the plastic film 1, 2 to 10% is more preferable, and 2 to 8% is even more preferable. When the thickness t1 is less than the aforementioned lower limit, a buffering effect of thermal damage on the plastic film 1 by heat transferred from external heating is reduced and there is a possibility of causing deterioration in quality. When the thickness t1 is more than the aforementioned upper limit, the rigidity of the plastic film 1 is remarkably increased and there is a possibility of deterioration in flexibility as a medical container.

### <Second Intermediate Layer>

The second intermediate layer 12 is a layer which is adjacent to the first outer layer 10 and is an interlayer adhesion layer between the first outer layer 10 and a first intermediate layer 14 which will be described later.

The second intermediate layer 12 contains a modified polyolefin made of a polymer of an α-olefin and an unsaturated carboxylic acid, or a polymer of an α-olefin and an anhydride monomer of an unsaturated dicarboxylic acid (hereinafter, collectively referred to as a polymer A in some cases), as a main component.

Examples of the α-olefin include ethylene and propylene. A polyolefin that is a homopolymer of ethylene or propylene, or a copolymer of ethylene and propylene is obtained by carrying out homopolymerization or copolymerization for an olefin by using a catalyst system (Ziegler catalyst) obtained from a transition metal compound and an organic aluminum compound, using a catalyst system (Phillips catalyst) obtained by causing a carrier (for example, silica) to carry a compound of chromium (for example, a chromic oxide), or using a radical initiator (for example, an organic peroxide).

In addition, the unsaturated carboxylic acid and the anhydride monomer of the unsaturated dicarboxylic acid is an unsaturated monomer having at least one double bond and is a compound containing at least one carboxyl group or an anhydride (group) thereof. Examples of the unsaturated carboxylic acid and the anhydride monomer of the unsaturated carboxylic acid or an unsaturated dicarboxylic acid include a (meta)acrylic acid, a maleic acid, an itaconic acid, a citraconic acid, an endic acid, a maleic acid anhydride, an itaconic acid anhydride, an endic acid anhydride and a citraconic acid anhydride.

The polymer A used in the second intermediate layer 12 is a graft polymer in which an unsaturated monomer is graft-polymerized to a polyolefin.

As the polyolefin used in the polymer A, in terms of excellent adhesiveness, a homopolymer of ethylene or a copolymer of ethylene and propylene is preferable. In terms of excellent transparency as well as adhesiveness, a copolymer of ethylene and propylene, particularly, an olefin-based thermoplastic elastomer which is a copolymer of ethylene and propylene, is more preferable.

As the polymer A, commercially available products may be used. Examples of the commercially available products of the polymer A include MODIC (trade name, manufactured by Mitsubishi Chemical Corporation), ZELAS (trade name, manufactured by Mitsubishi Chemical Corporation) and ADMER (trade name, manufactured by Mitsui Chemicals, Inc.).

The content of the polymer A in the resin forming the second intermediate layer 12 is more than 50% by mass, preferably greater than or equal to 75% by mass, and more preferably 100% by mass. The greater the content of the polymer A, the greater the first outer layer 10 and the first intermediate layer 14 can be rigidly bonded.

The second intermediate layer 12 can contain resins other than the polymer A in the range of not deteriorating adhesive strength. Examples of the resins other than the polymer A contained in the second intermediate layer 12 include polyethylene and polypropylene.

The thickness t2 of the second intermediate layer 12 is preferably 2 to 15% with respect to the total thickness T, and more preferably 2 to 10%. When the thickness t2 is less than the aforementioned lower limit, there is a possibility of insufficient adhesion with the first outer layer 10. When the thickness t2 is more than the aforementioned upper limit, there is a possibility of deterioration in strength physical properties of the plastic film 1 or causing an unnecessary increase in manufacturing cost.

### <First Intermediate Layer>

The first intermediate layer 14 is a layer containing a linear low-density polyethylene as a main component. When the first intermediate layer 14 is provided, flexibility of the plastic film 1 is improved and transparency is maintained at a high level.

The linear low-density polyethylene is a polymer of ethylene and one or more kinds of α-olefins selected from α-olefins having 3 to 20 carbon atoms.

Among the α-olefins having 3 to 20 carbon atoms, an α-olefin having 3 to 12 carbon atoms is preferable and examples thereof include propylene, 1-buten, 1-penten, 4-methyl1-penten, 1-hexene, 1-octene, 1-decene and 1-dodecene. Among them, propylene, 1-buten, 1-hexene and 1-octene are preferable.

The content of the α-olefin in the linear low-density polyethylene is preferably 1 to 30% by mol, and more preferably 3 to 20% by mol.

The density of the linear low-density polyethylene is preferably 0.890 to 0.940 g/cm³. In addition, the melt mass flow rate (hereinafter, referred to as "MFR" in some cases) of the linear low-density polyethylene is preferably 0.1 to 20 g/10 min. In the present invention, the density is a value measured according to the JIS K7112D method and the MFR is a value measured according to JIS K7210 at a temperature of 190°C with a load of 21.18 N unless otherwise indicated.

A method of producing a linear low-density polyethylene is not particularly limited and known methods in the related art can be used.

The linear low-density polyethylene is preferably produced using a metallocene-based catalyst or a Ziegler-Natta catalyst. Among them, from the viewpoint of excellent strength and transparency, a metallocene-based linear low-density polyethylene produced using the metallocene-based catalyst is more preferable.

Examples of commercially available products of the linear low-density polyethylene include EXCELLEN GMH (trade name, manufactured by Sumitomo Chemical Co., Ltd.), which is a metallocene-based linear low-density polyethylene, EVOLUE (trade mane, manufactured by Prime Polymer Co., Ltd.), KERNEL and HARMOREX (trade names, manufactured by Japan Polyethylene Corporation).

The content of the linear low-density polyethylene in the resin forming the first intermediate layer 14 is more than 50% by mass, preferably greater than or equal to 70% by mass, and may be 100% by mass.

A mixture of a linear low-density polyethylene and a high-density polyethylene is preferably used in the first intermediate layer 14. By using the mixture of the linear low-density polyethylene and the high-density polyethylene, heat resistance of the plastic film 1 is further improved. The content of the high-density polyethylene in the mixture is preferably 5 to 40% by mass, and more preferably 5 to 30% by mass. When the content of the high-density polyethylene is greater than or equal to the aforementioned lower limit, heat resistance and appearance can be improved. On the other hand, when the content is more than the aforementioned upper limit, transparency and flexibility tend to be reduced.

The density of the high-density polyethylene used in the first intermediate layer 14 is more than 0.940 g/cm³.

The MFR of the high-density polyethylene is preferably 0.1 to 10 g/10 min, and more preferably 0.5 to 5.0 g/10 min. When the MFR is lower than the aforementioned lower limit, the pressure of resin during extrusion molding is increased and there is a possibility of a reduction in moldability. When the MFR is higher than the aforementioned upper limit, there is a possibility of a reduction in bubble stability during the film production by a co-extrusion inflation method.

The molecular weight distribution (Mw/Mn) of the high-density polyethylene is preferably less than or equal to 4. When the Mw/Mn is more than 4, transparency of the plastic film 1 tends to be reduced. The Mw/Mn is a ratio of weight average molecular weight Mw and number average molecular weight Mn, which is measured by gel permeation chromatography and calculated using a standard curve in which polystyrene is employed as a standard sample.

The melting peak temperature (melting point) of the high-density polyethylene is preferably greater than or equal to 128°C. The upper limit of the melting peak temperature of the high-density polyethylene can be set to the melting peak temperature of commercially available high-density polyethylenes. However, in order to form the plastic film 1 into a bag-shaped medical container having excellent moldability and heat resistance, the melting peak temperature of the high-density polyethylene is preferably 128 to 138°C, and more preferably 130 to 135°C.

The melting peak temperature is a melting peak temperature which is shown when a sample is maintained at a temperature of approximately 30°C higher than the melting peak temperature of the sample for 10 minutes, cooled to 30°C at a rate of 10°C/min, and then, heated to a temperature of 30°C higher than the melting peak temperature at a rate of 10°C/min, using a differential scanning calorimeter.

The resin forming the first intermediate layer 14 may contain a crystal nucleating agent. By containing a crystal nucleating agent, transparency and heat resistance of the plastic film 1 can be further improved. Examples of the crystal nucleating agent preferably include a mixture of a cyclohexane·calcium dicarboxylic acid salt and zinc stearate.

The content of the crystal nucleating agent in the resin forming the first intermediate layer 14 is preferably 0.5 to 2.5% by mass. When the content is greater than or equal to the aforementioned lower limit, heat resistance and transparency can be further improved. By contrast, when the content is more than the aforementioned upper limit, the degree of improvement in heat resistance and transparency is low.

The thickness t3 of the first intermediate layer 14 is preferably 40 to 95% with respect to the total thickness T, more preferably 75 to 95%, and even more preferably 80 to 95%. In the aforementioned range, transparency, flexibility and impact resistance are excellent.

### <Second Outer Layer>

The second outer layer 16 is a layer which contains a high-density polyethylene, and is a sealing layer for welding the plastic films 1 by heat sealing.

The content of the high-density polyethylene in the resin forming the second outer layer 16 is preferably greater than or equal to 20% by mass, more preferably greater than or equal to 50% by mass, and even more preferably substantially 100% by mass. When the content is greater than or equal to the aforementioned lower limit, deformation does not occur in steam autoclaving under a heating condition of 121°C. In addition, the more the content of the high-density polyethylene is increased, the more excellent the heat resistance and blocking resistance are.

The resin forming the second outer layer 16 may be a mixture of a high-density polyethylene and a linear low-density polyethylene. The content of the linear low-density polyethylene in the resin forming the second outer layer 16 is preferably less than or equal to 50% by mass from the viewpoint of blocking resistance, more preferably less than or equal to 45% by mass, and even more preferably less than or equal to 40% by mass. When the content is more than the aforementioned upper limit, heat sealing can be carried out at a relatively low temperature or in a short time. However, blocking tends to easily occur between the inner surfaces of the plastic film 1. The lower limit of the content of the linear low-density polyethylene in the resin forming the second outer layer 16 is, for example, preferably greater than or equal to 10% by mass, and more preferably greater than or equal to 20% by mass. When the content is greater than or equal to the aforementioned lower limit, transparency and impact resistance of the plastic film 1 can be further improved.

Further, as the resin forming the second outer layer 16, a mixture of 20 to 40% by mass of high-density polyethylene, 10 to 30% by mass of low-density polyethylene, 70 to 30% by mass of linear low-density polyethylene is preferable, a mixture of 20 to 30% by mass of high-density polyethylene, 10 to 25% by mass of low-density polyethylene, and 70 to 45% by mass of linear low-density polyethylene is more preferable. While heat resistance and blocking resistance are inhibited from being reduced, transparency and impact resistance can be further improved by using a mixture of three components of a high-density polyethylene, a low-density polyethylene and a linear low-density polyethylene.

The low-density polyethylene in the present invention is a high-pressure method polyethylene.

The density is preferably 0.910 to 0.930 g/cm³ and the MFR is preferably 0.1 to 10 g/10 min.

The resin composition of the second outer layer 16 is appropriately determined according to applications of containers using the plastic film 1 (for example, a kind or capacity of a content), and properties required for the containers.

The linear low-density polyethylene used in the second outer layer 16 can be the same as the linear low-density polyethylene used in the first intermediate layer 14.

The linear low-density polyethylene used in the second outer layer 16 is preferably produced using a metallocene-based catalyst or a Ziegler-Natta catalyst.

The MFR of the linear low-density polyethylene used in the second outer layer 16 is not particularly limited but is preferably, for example, 0.1 to 10 g/10 min.

The density of the linear low-density polyethylene used in the second outer layer 16 is not particularly limited but is preferably, for example, less than or equal to 0.925 g/cm³. When the density is less than or equal to the aforementioned upper limit, transparency and impact resistance of the plastic film 1 can be more efficiently improved.

The melting peak temperature of the second outer layer 16 is less than or equal to the melting peak temperature of the first outer layer 10. A difference (difference in the melting peak temperature) between the melting peak temperature of the first outer layer 10 and the melting peak temperature of the second outer layer 16 is preferably greater than or equal to 40°C, and more preferably greater than or equal to 50°C. When the difference in the melting peak temperature is lower than the aforementioned lower limit, deterioration in the quality of the plastic film 1 due to heat sealing easily occurs.

The upper limit of the difference in the melting peak temperature is not particularly limited and is preferably less than or equal to 100°C. When the difference between the melting peak temperature of the first outer layer 10 and the melting peak temperature of the second outer layer 16 is large, the second outer layer 16 is formed at a high temperature during co-extrusion, the viscosity of the second outer layer 16 is remarkably reduced, and there is a possibility that the second outer layer may not be produced stably.

The thickness t4 of the second outer layer 16 is preferably 1 to 30% with respect to the total thickness T, more preferably 2 to 20%, and even more preferably 3 to 15%. When the thickness t4 is less than the aforementioned lower limit, strength physical properties of the plastic film 1 can be deteriorated. When the thickness t4 is more than the aforementioned upper limit, transparency and flexibility can be reduced.

The total thickness T of the plastic film 1 can be determined in consideration of application of the plastic film 1, and when the plastic film 1 is used in an infusion solution bag, for example, the total thickness is preferably 50 to 1,000 µm and more preferably 100 to 350 µm. When the total thickness is less than the aforementioned lower limit, impact resistance, water vapor barrier properties and heat resistance during processing such as a heat sealing process and at the time of use can be insufficient. When the total thickness is more than the aforementioned upper limit, transparency and flexibility can be insufficient. The total thickness T is preferably 150 to 300 µm from the viewpoint of further improving transparency and water vapor barrier properties.

### <Method of Producing Plastic Film>

A method of producing the plastic film 1 is a co-extrusion method. Examples of the co-extrusion method include a method of forming a film in a roll shape using a multi-layered T die method and a method of forming a film in a tubular shape using a multi-layered inflation method. Among them, the method of forming a film in a tubular shape using a multi-layered inflation method is preferable. Since the film is formed in a tubular shape, the surface which is brought into contact with a content such as a medicinal solution during bag making is not exposed to the external environment and a bag can be more hygienically produced. From the viewpoint of further improving transparency of the plastic film 1, a water-cooling type co-extrusion inflation method capable of rapidly cooling a film from a molten state is more preferable.

### (Infusion Solution Bag)

An infusion solution bag according to an embodiment of the present invention will be described with reference to FIG. 2 below.

An infusion solution bag 100 in FIG. 2 includes a bag body 110 made of a tubular plastic film (tube film). The infusion solution bag 100 is formed in such a manner that a first heat sealed portion 112 is formed by heat sealing one open end of the tube film in a state where a tubular spout 111 is provided, an infusion solution storage portion 113 is filled with an infusion solution using the first heat sealed portion 112 as a bottom, and a second heat sealed portion 114 is formed by heat sealing the other open end of the tube film. In the approximate center of the second heat sealed portion 114, a suspending hole 115 is punctured, and rectangular unsealed portions 116 are arranged on both sides of the hole. To the tip end of the spout 111, a rubber plug 117 into which an injection needle is inserted is attached. The spout 111 may be a tube.

As described above, since the plastic film in the embodiment includes the first outer layer, the second intermediate layer, the first intermediate layer and the second outer layer, which are sequentially laminated, deterioration in quality due to external heating does not easily occur and blocking can be prevented.

Since the plastic film in the embodiment can be heat-sealed at a high temperature in a short time without deterioration in quality due to external heating, the bag can be made at a high speed.

Since the plastic film in the embodiment can be produced by a co-extrusion method, there is no concern of adhesive elution.

In plastic films of the related art, blocking easily occurred when sealing layers were opposite to each other and rolled in an overlapping manner. In the plastic film of the embodiment, blocking does not easily occur even when the second outer layers which are sealing layers overlap each other so as to be opposite to each other. Therefore, even when the film is formed into a tubular shape by the co-extrusion inflation method, the film can be rolled as a winding body in which blocking does not occur. That is, when the plastic film of the embodiment is produced by the co-extrusion inflation method, a remarkable effect is exhibited. Since, the surface which is brought into contact with a content is kept more hygienic in the plastic film produced by the co-extrusion inflation method, the plastic film is particularly suitable for infusion solution bags and containers storing medicinal solutions.

The plastic film of the present invention is not limited to the aforementioned embodiment.

In the aforementioned embodiment, each of the first outer layer, the second outer layer, the first intermediate layer and the second intermediate layer is provided as a single layer, but the present invention is not limited thereto. Each layer may be two or more layers as long as functions are not deteriorated.

Further, the plastic film of the present invention may have the first intermediate layer arranged between the first outer layer and the second outer layer and the second intermediate layer arranged between the first outer layer and the first intermediate layer, and, for example, may have a third intermediate layer arranged between the first intermediate layer and the second intermediate layer. Examples of the third intermediate layer include a gas barrier layer containing an ethylene-vinyl alcohol copolymer, MXD nylon, and the like as main components.

### Examples

Hereinafter, the present invention will be described using examples, but the present invention is not limited to the following description. Unless otherwise stated, "%" in Tables refers to "% by mass".

### (Raw Materials Used)

Resins used in the first outer layer, the second intermediate layer, the first intermediate layer, and the second outer layer in each example are as follows:
PET 1: Polyester elastomer (alicyclic polyester), ECDEL 9966 (trade name), melting peak temperature = 205°C, manufactured by Eastman Chemical Co., Ltd.;
PET 2: Polyester elastomer (polyester including units derived from an aromatic compound), HYTREL 4767 (trade name), melting peak temperature = 199°C, manufactured by DU PONT-TORAY CO.,LTD.;
AD 1: Modified olefin-based thermoplastic elastomer, ZELAS MC 721AP (trade name), density = 0.89 g/cm³, MFR (value measured according to JIS K7210 at a temperature of 230°C with a load of 21.18 N) = 3.5 g/10 min, melting peak temperature = 155°C, manufactured by Mitsubishi Chemical Corporation;
AD 2: Modified polyolefin, ADMER NF308 (trade name), density = 0.932 g/cm³, MFR = 1.7 g/10 min, melting peak temperature = 125°C, manufactured by Mitsui Chemicals, Inc.;
LLD 1: Metallocene-based linear low-density polyethylene, EVOLUE SP0511 (trade mane), density = 0.910 g/cm³, MFR = 1.2 g/10 min, melting peak temperature = 110°C, manufactured by Prime Polymer Co., Ltd.;
LLD 2: Ziegler-based linear low-density polyethylene, MORETEC 3500Z (trade name), density = 0.921 g/cm³, MFR = 2 g/10 min, melting peak temperature = 121°C, manufactured by Prime Polymer Co., Ltd.;
HD: High-density polyethylene, density = 0.955 g/cm³, MFR = 3.5 g/10min, melting peak temperature = 132°C, Mw/Mn = 3.5; and
LD: High-pressure method low-density polyethylene, density = 0.927 g/cm³, MFR = 1 g/10 min, melting peak temperature = 115°C.

The melting peak temperatures of mixtures used in each example were as follows:
Mixture of LLD 1 (80% by mass) and HD (20% by mass): Melting peak temperature = 125°C;
Mixture of LLD 1 (20% by mass) and HD (80% by mass): Melting peak temperature = 130°C;
Mixture of LLD 1 (40% by mass) and HD (60 % by mass): Melting peak temperature = 128°C;
Mixture of LLD 2 (80% by mass) and HD (20 % by mass): Melting peak temperature = 127°C; and
Mixture of LLD 1 (60% by mass), HD (20 % by mass) and LD (20%): Melting peak temperature = 126°C.

### (Evaluation Method)

### <Heat Sealing Properties>

In order to examine the effects of heat sealing temperatures, heat sealing was carried out at different temperatures. Two sheets of plastic films in each example overlapped each other so that sealing layers were opposite to each other and were heat-sealed at a pressure of 0.2 MPa using upper and lower heat sealing plates heated to four different temperatures (180°C, 200°C, 220°C, 240°C). Further, in order to examine the effects of heat sealing durations, heat sealing was carried out at different times. The heat sealing durations were set to 0.1, 0.3, 0.5, 1.0, 2.0 and 3.0 seconds.

The plastic films were heat-sealed at the aforementioned different temperatures and a heat sealing duration was selected considering states of the sealed portions.

The samples that were subjected to heat sealing were cut into strips having a width of 15 mm, peeling was carried out at a tensile speed of 300 mm/min using a tensile tester according to JIS-K6854-3, and heat sealing properties were evaluated using the evaluation criteria of A to D-- defined below.

### «Evaluation Criteria»

A: No deterioration in quality is found on the outer surface of the film, and the peeling strength is also high. The peeling strength is greater than or equal to 50 N/15 mm.
B+: No deterioration in quality is found on the outer surface, but the peeling strength is slightly low. The peeling strength is greater than or equal to 30 N/15 mm and less than 50 N/15 mm.
B-: A slight reduction in the thickness of the outer surface is found, but the peeling strength is high. The peeling strength is greater than or equal to 50 N/15 mm.
C+: No deterioration in quality is found on the outer surface, but the peeling strength is low. The peeling strength is less than 30 N/15 mm.
C-: A reduction in the thickness of the outer surface is found, but the peeling strength is high. The peeling strength is greater than or equal to 50 N/15 mm.
D+: No deterioration in quality is found on the outer surface, but sealing is not attained.
D-: A reduction in the thickness of the outer surface is remarkable, but the peeling strength is high. The peeling strength is greater than or equal to 50 N/15 mm.
D--: A reduction in the thickness of the outer surface is remarkable, melt films partially stick to perforations and the sealing plates, and the peeling strength is high. The peeling strength is greater than or equal to 50 N/15 mm.

### <Elution Test Defined by Pharmacopoeia>

An elution test stipulated in the Fifteenth Amendment of General Test Act and Plastic Pharmaceutical Container Test Act of General Test Act of the First Part of the Japanese Pharmacopoeia, Fifteenth Edition was carried out for the plastic films of each example. It has been determined whether or not measure values of the elution test are within the specifications of a polyethylene or polypropylene aqueous parenteral injection container in Table 1.

**[Table 1]**

| Test items (Elution Test) | Specifications |
|---|---|
| Effervescence | Almost disappears within 3 minutes |
| pH | The difference is less than or equal to 1.5 |
| Potassium permanganate reducing substance | The difference is less than or equal to 1.0 ml |
| Ultraviolet absorption spectrum (a wavelength of greater than or equal to 220 nm and less than 241 nm) | Less than or equal to 0.08 |
| Ultraviolet absorption spectrum (a wavelength of greater than or equal to 241 nm and less than or equal to 350 nm) | Less than or equal to 0.05 |
| Evaporation residue | Less than or equal to 1.0 mg |

The elution test was carried out by a strip method and a pouch method.

### «Preparation of Test Solution for Strip Method»

A portion with uniform thicknesses of the plastic films in each example was cut into strips of 20 cm x 30 cm so as to have a liquid contact surface area of 1200 cm² and these cut strips were used as test pieces. The obtained test pieces were further finely cut into a size of 5 cm x 0.5 cm to obtain sub-fragments. The sub-fragments were washed with distilled water and dried. All of the dried sub-fragments and 200 mL of distilled water were placed in a 300 mL hard glass container and the hard glass container was sealed tightly. Then, the hard glass container was heated at 121 °C for 1 hour in a high-pressure steam sterilizer. After the heating, the hard glass container was taken out from the high-pressure steam sterilizer and allowed to reach room temperature. This content solution was used as a test solution for the strip method. The effervescence, pH, potassium permanganate reducing substance, ultraviolet absorption spectrum and evaporation residue were measured using the test solution for the strip method.

### «Preparation of Test Solution for Pouch Method»

A four-side sealed pouch (30 cm x 40 cm, sealing width: 5 mm) storing 200 mL of distilled water was prepared using plastic films in each example so as to have a liquid contact surface area of 1200 cm². The four-side sealed pouch was heated at 121 °C for one hour in a high-pressure steam sterilizer. After the heating, the four-side sealed pouch was taken out from the high-pressure steam sterilizer, and left to reach room temperature. This content solution was used as a test solution for the pouch method. The effervescence, pH, potassium permanganate reducing substance, ultraviolet absorption spectrum and evaporation residue were measured using the test solution for the pouch method.

### [pH]

20 mL of the test solution for the strip method or the pouch method and distilled water was respectively collected, 1 mL of a 1 g/L potassium chloride aqueous solution was added thereto, and thus the pH was measured. A difference between the pH of the test solution and the pH of the distilled water was calculated.

### [Effervescence]

5 mL of the test solution for the strip method or the pouch method was placed in a stoppered test tube having an inner diameter of 15 mm and a length of 200 mm, was vigorously shaken for 3 minutes, and thus the time until generated bubbles disappeared was measured.

### [Potassium Permanganate Reducing Substance]

20 mL of a 0.002 mol/L potassium permanganate solution and 1 mL of dilute sulfuric acid were added to 20 mL of the test solution for the strip method or the pouch method, boiled for 3 minutes and then, cooled. After the cooling, 0.1 g of potassium iodide was added thereto, mixed, and left for 10 minutes. After being left, the resultant was titrated with a 0.001 mol/L sodium thiosulfate solution (indicator: starch regent). A blank test was carried out in the same manner except that the test solution was changed to distilled water. A difference in consumption amount of the 0.002 mol/L potassium permanganate solution with respect to the test solution and distilled water (blank test) was calculated.

### [Ultraviolet Absorption Spectrum]

Each maximum absorbance of the test solution for the strip method or the pouch method in wavelength sections of 220 to 240 nm and 241 to 350 nm was measured by an ultraviolet and visible spectrophotometry using distilled water as a reference.

### [Evaporation Residue]

20 mL of each test solution for the strip method and the pouch method was collected, evaporated and dried on a water bath, a residue was dried at 105°C for 1 hour, and thus the mass was measured.

### <Haze Evaluation>

Plastic films in each example were cut into 20 cm x 15 cm, two sheets of the plastic films were overlapped so that the second outer layers were opposite to each other, and a three-side sealed bag was prepared by heat sealing with a sealing width of 5 mm. The three-side sealed bag was filled with 500 ml of distilled water, and an opening was sealed by heat sealing.

The sealed bag was subjected to steam autoclaving at 121°C for 30 minutes. After that, the bag was swiftly opened and the distilled water was discharged, and a state adjustment was carried out for 24 hours under the environment of temperature of 23°C and humidity of 50% RH. The haze of the state adjusted bag was measured according to JIS-K6714.

### <Presence of Crinkles>

The presence of crinkles on the outer surface of the three-side sealed bag after steam autoclaving used in the haze evaluation was visually evaluated.

In the evaluation, when no crinkles were found on the outer surface, it was determined to be "crinkles not present", and when some crinkles were found and allowable, it was determined to be "crinkle present".

### <Presence of Blocking>

Evaluation was carried out by a total of three methods of one type of blocking before steam autoclaving and two types of blocking after autoclaving.

### <Blocking Test Before Autoclaving>

After a film was produced using a water-cooling type co-extrusion inflation film making machine, the inner surfaces of the flattened tubular plastic film were in tight contact with each other. When whitening occurred during peeling of the inner surfaces in the tight contact state, it was determined as "blocking found", and when no whitening occurred during peeling, it was determined as "blocking not found".

### <Blocking Test 1 After Autoclaving>

When the three-side sealed bag used in the haze evaluation was opened after steam autoclaving, the inner surfaces of the bag can be completely separated from each other. However, when at least some parts were found to be in tight contact with each other, it was determined as "blocking found", and when no parts were found to be in tight contact with each other, it was determined as "blocking not found". This blocking test 1 after autoclaving is a normal blocking test in which a ratio of a bag capacity to an amount of content is a quantitative relationship under normal conditions of use.

### <Blocking Test 2 After Autoclaving>

Plastic films in each example were cut into 10 cm x 10 cm, two sheets of the plastic films were overlapped so that the second outer layers were opposite to each other, and a three-side sealed bag was prepared by heat sealing with a sealing width of 5 mm. The three-side sealed bag was filled with 50 mL of distilled water, and the opening was sealed by heat sealing.

The sealed bag was subjected to steam autoclaving at 121°C for 30 minutes so that some parts of the inner surfaces of the bag were in tight contact with each other. After that, the degree of blocking when the bag was swiftly opened was determined using the same reference as in the blocking test 1 after autoclaving. The blocking test 2 after autoclaving has severe conditions where blocking easily occurs since the amount of content is small and the bag is subjected to steam autoclaving so that some parts of the inner surfaces are in tight contact with each other, in comparison with the blocking test 1 after autoclaving.

### <Bag Drop Test>

Ten bags which had been prepared for haze evaluation and subjected to steam autoclaving were stored at 4°C for 1 day, and then, each bag was dropped once from a height of 2m, and thus, the number of broken bags was counted.

### (Examples 1 to 8, Comparative Examples 1 to 3)

According to configurations of Tables 2 to 5, tubular plastic films in each example were produced using a water-cooling type co-extrusion inflation film making machine with four kinds of four layers. The heat sealing properties, elution test of Pharmacopoeia, haze, presence of crinkles, presence of blocking, and bag falling strength based on bag drop test of the obtained plastic films were evaluated. Any one of the plastic films in each example has the first outer layer with a thickness of 10 µm, the second intermediate layer with a thickness of 10 µm, the first intermediate layer with a thickness of 130 µm, and the second outer layer with a thickness of 10 µm.

In Comparative Examples 2 and 3, since bags were broken during steam autoclaving and distilled water as a content flowed out, the elution test defined by Pharmacopoeia, haze evaluation, presence of crinkles, blocking test after autoclaving, and bag drop test were not carried out.

**[Table 2]**

| | Configuration | | | | Results | | | | | | | | | | |
|---|---|---|---|---|---|---|---|---|---|---|---|---|---|---|---|
| | First outer layer (10µm) | Second intermediate layer (10µm) | First intermediate layer (130µm) | Second outer layer (10µm) | Heat sealing properties | | | Elusion test of Pharmacopoeia | | Haze (after autoclaving at 121°C) | Presence of crinkles | Blocking | | | Bag drop test (piece) |
| | | | | | Heat sealing temperature (°C) | Heat sealing duration (sec) | Results | Strip | Pouch | | | Before autoclaving | After autoclaving 1 | After autoclaving 2 | |
| Example 1 | PET1 | AD1 | LLD1 (80%) + HD (20%) | HD (100%) | 180 | 0.5 | D+ | All test items are appropriate | All test items are appropriate | 10.3 | Not present | Not found | Not found | Not found | 2 |
| | | | | | | 1 | B+ | | | | | | | | |
| | | | | | 200 | 0.5 | A | | | | | | | | |
| | | | | | | 1 | A | | | | | | | | |
| | | | | | 220 | 0.3 | A | | | | | | | | |
| | | | | | | 0.5 | A | | | | | | | | |
| | | | | | 240 | 0.1 | A | | | | | | | | |
| | | | | | | 0.3 | A | | | | | | | | |
| Example 2 | PET2 | AD1 | LLD1 (80%) + HD (20%) | HD (100%) | 180 | 0.5 | D+ | Only ultraviolet adsorption spectrum is inappropriate | All test items are appropriate | 10.1 | Not present | Not found | Not found | Not found | 2 |
| | | | | | | 1 | B+ | | | | | | | | |
| | | | | | 200 | 0.5 | A | | | | | | | | |
| | | | | | | 1 | A | | | | | | | | |
| | | | | | 220 | 0.3 | A | | | | | | | | |
| | | | | | | 0.5 | A | | | | | | | | |
| | | | | | 240 | 0.1 | A | | | | | | | | |
| | | | | | | 0.3 | A | | | | | | | | |
| Example 3 | PET1 | AD1 | LLD1 (80%) + HD (20%) | HD (80%) + LLD (20%) | 180 | 0.5 | B+ | All test items are appropriate | All test items are appropriate | 9.1 | Not present | Not found | Not found | Not found | 1 |
| | | | | | | 1 | A | | | | | | | | |
| | | | | | 200 | 0.5 | A | | | | | | | | |
| | | | | | | 1 | A | | | | | | | | |
| | | | | | 220 | 0.3 | A | | | | | | | | |
| | | | | | | 0.5 | A | | | | | | | | |
| | | | | | 240 | 0.1 | A | | | | | | | | |
| | | | | | | 0.3 | A | | | | | | | | |

**[Table 3]**

| | Configuration | | | | Results | | | | | | | | | | |
|---|---|---|---|---|---|---|---|---|---|---|---|---|---|---|---|
| | First outer layer (10µm) | Second intermediate layer (10µm) | First intermediate layer (130µm) | Second outer layer (10µm) | Heat sealing properties | | | Elusion test of Pharmacopoeia | | Haze (after autoclaving at 121°C) | Presence of crinkles | Blocking | | | Bag drop test (piece) |
| | | | | | Heat sealing temperature (°C) | Heat sealing duration (sec) | Results | Strip | Pouch | | | Before autoclaving | After autoclaving 1 | After autoclaving 2 | |
| Example 4 | PET1 | AD1 | LLD1 (80%) + HD (20%) | HD (60%) + LLD1 (40%) | 180 | 0.5 | A | All test items are appropriate | All test items are appropriate | 8.8 | Not present | Not found | Not found | Not found | 1 |
| | | | | | | 1 | A | | | | | | | | |
| | | | | | 200 | 0.5 | A | | | | | | | | |
| | | | | | | 1 | A | | | | | | | | |
| | | | | | 220 | 0.3 | A | | | | | | | | |
| | | | | | | 0.5 | A | | | | | | | | |
| | | | | | 240 | 0.1 | A | | | | | | | | |
| | | | | | | 0.3 | A | | | | | | | | |
| Example 5 | PET1 | AD1 | LLD1 (100%) | HD (100%) | 180 | 0.5 | D+ | All test items are appropriate | All test items are appropriate | 12.2 | Present | Not found | Not found | Not found | 2 |
| | | | | | | 1 | B+ | | | | | | | | |
| | | | | | 200 | 0.5 | A | | | | | | | | |
| | | | | | | 1 | A | | | | | | | | |
| | | | | | 220 | 0.3 | A | | | | | | | | |
| | | | | | | 0.5 | A | | | | | | | | |
| | | | | | 240 | 0.1 | A | | | | | | | | |
| | | | | | | 0.3 | A | | | | | | | | |
| Example 6 | PET1 | AD1 | LLD2 (80%) + HD (20%) | HD (100%) | 180 | 0.5 | D+ | All test items are appropriate | All test items are appropriate | 13.3 | Not present | Not found | Not found | Not found | 2 |
| | | | | | | 1 | B+ | | | | | | | | |
| | | | | | 200 | 0.5 | A | | | | | | | | |
| | | | | | | 1 | A | | | | | | | | |
| | | | | | 220 | 0.3 | A | | | | | | | | |
| | | | | | | 0.5 | A | | | | | | | | |
| | | | | | 240 | 0.1 | A | | | | | | | | |
| | | | | | | 0.3 | A | | | | | | | | |

**[Table 4]**

| | Configuration | | | | Results | | | | | | | | | | |
|---|---|---|---|---|---|---|---|---|---|---|---|---|---|---|---|
| | First outer layer (10µm) | Second intermediate layer (10µm) | First intermediate layer (130µm) | Second outer layer (10µm) | Heat sealing properties | | | Elusion test of Pharmacopoeia | | Haze (after autoclaving at 121°C) | Presence of crinkles | Blocking | | | Bag drop test (piece) |
| | | | | | Heat sealing temperature (°C) | Heat sealing duration (sec) | Results | Strip | Pouch | | | Before autoclaving, | After autoclaving 1 | After autoclaving 2 | |
| Example 7 | PET1 | AD2 | LLD2 (80%) + HD (20%) | HD (100%) | 180 | 0.5 | D+ | All test items are appropriate | All test items are appropriate | 13.5 | Not present | Not found | Not found | Not found | 2 |
| | | | | | | 1 | B+ | | | | | | | | |
| | | | | | 200 | 0.5 | A | | | | | | | | |
| | | | | | | 1 | A | | | | | | | | |
| | | | | | 220 | 0.3 | A | | | | | | | | |
| | | | | | | 0.5 | A | | | | | | | | |
| | | | | | 240 | 0.1 | A | | | | | | | | |
| | | | | | | 0.3 | A | | | | | | | | |
| Example 8 | PET1 | AD1 | LLD2 (80%) + HD (20%) | HD (20%) + LLD1 (60%) + LD (20%) | 180 | 0.5 | A | All test items are appropriate | All test items are appropriate | 8.0 | Not present | Not found | Not found | Found | 0 |
| | | | | | | 1 | A | | | | | | | | |
| | | | | | 200 | 0.5 | A | | | | | | | | |
| | | | | | | 1 | A | | | | | | | | |
| | | | | | 220 | 0.3 | A | | | | | | | | |
| | | | | | | 0.5 | A | | | | | | | | |
| | | | | | 240 | 0.1 | A | | | | | | | | |
| | | | | | | 0.3 | A | | | | | | | | |

**[Table 5]**

| | Configuration | | | | Results | | | | | | | | | | |
|---|---|---|---|---|---|---|---|---|---|---|---|---|---|---|---|
| | First outer layer (10µm) | Second intermediate layer (10µm) | First intermediate layer (130µm) | Second outer layer (10µm) | Heat sealing properties seating properties | | | Elusion test of Pharmacopoeia | | Haze (after autoclaving at 121°C) | Presence of crinkles | Blocking | | | Bag drop test (piece) |
| | | | | | Heat sealing temperature (°C) | Heat sealing duration (sec) | Results | Strip | Pouch | | | Before autoclaving | After autoclaving 1 | After autoclaving 2 | |
| Comparative example 1 | HD | AD1 | LLD1 (80%) + HD (20%) | HD (100%) | 180 | 0.5 | D+ | All test items are appropriate | All test items are appropriate | 14.2 | Not present | Not found | Not found | Not found | 2 |
| | | | | | | 1 | B+ | | | | | | | | |
| | | | | | 200 | 2 | A | | | | | | | | |
| | | | | | | 3 | B- | | | | | | | | |
| | | | | | 220 | 1 | C- | | | | | | | | |
| | | | | | | 2 | D- | | | | | | | | |
| | | | | | 240 | 0.5 | C- | | | | | | | | |
| | | | | | | 1 | D- | | | | | | | | |
| | | | | | | 2 | D- | | | | | | | | |
| Comparative example 2 | PET1 | AD1 | LLD1 (80%) + HD (20%) | LLD2 (100%) | 180 | 0.5 | A | - | - | - | - | Not found | - | - | - |
| | | | | | | 1 | A | | | | | | | | |
| | | | | | 200 | 0.5 | A | | | | | | | | |
| | | | | | | 1 | A | | | | | | | | |
| | | | | | 220 | 0.3 | A | | | | | | | | |
| | | | | | | 0.5 | A | | | | | | | | |
| | | | | | 240 | 0.1 | A | | | | | | | | |
| | | | | | | 0.3 | A | | | | | | | | |
| Comparative example 3 | PET1 | AD1 | LLD1 (80%) + HD (20%) | LLD1 (100%) | 180 | 0.5 | A | - | - | - | - | Found | - | - | - |
| | | | | | | 1 | A | | | | | | | | |
| | | | | | 200 | 0.5 | A | | | | | | | | |
| | | | | | | 1 | A | | | | | | | | |
| | | | | | 220 | 0.3 | A | | | | | | | | |
| | | | | | | 0.5 | A | | | | | | | | |
| | | | | | 240 | 0.1 | A | | | | | | | | |
| | | | | | | 0.3 | A | | | | | | | | |

As shown in Tables 2 to 5, in any one of Examples 1 to 8 to which the present invention is applied, heat sealing properties were "A" at a heat sealing temperature of greater than or equal to 200°C, and blocking did not occur under normal conditions of use (blocking test 1 after autoclaving).

Further, in Examples 1 to 7, blocking was not found even under severe conditions where blocking easily occurs (blocking test 2 after autoclaving), and blocking resistance was very excellent. In Examples 1 to 7, one to two bags were broken in the bag drop test, which causes no problem in normal use.

In Examples 1 to 4 and 6 to 8 in which a mixture of LLD 1 and HD and a mixture of LLD 2 and HD were used in the first intermediate layer, crinkles did not occur after steam autoclaving. However, in Example 5 in which the first intermediate layer was made of only LLD 1, crinkles occurred after steam autoclaving. From the results, when the first intermediate layer was made of a mixture of a linear low-density polyethylene and a high-density polyethylene, it was found that crinkles were able to be prevented from occurring.

In the elution test of Japanese Pharmacopoeia, both Example 1 in which PET 1 was used in the first outer layer and Example 2 in which PET 2 was used in the first outer layer were appropriate in the elution test using a pouch method, however, Example 2 was not appropriate in the elution test using a strip method in which a higher load is applied.

In Examples 3 and 4 in which LLD 1 was added to the second outer layer, it was found that the more the amount of LLD 1 was added, the stronger the peeling strength became with heat sealing even at a low temperature and in a short time.

In Example 6 in which a Ziegler-based linear low-density polyethylene was used in the first intermediate layer, it was found that haze was high and transparency was low in comparison with Example 1 in which a metallocene-based linear low-density polyethylene was used.

In Example 8 in which a modified polyethylene was used in the second intermediate layer, it was found that haze was high and transparency was low in comparison with Example 1 in which a modified olefin-based elastomer was used. Further, while blocking was not found in the blocking test 1 after autoclaving in Example 8, it was observed that some parts of the inner surfaces of the bag were in tight contact with each other in the blocking test 2 after autoclaving. However, there was no broken bag in the bag drop test and bag drop strength and impact resistance were excellent.

In Comparative example 1 in which HD was used in the first outer layer and the second outer layer, haze and heat sealing properties were remarkably deteriorated.

In Comparative example 2 in which LLD 2 was used in the second outer layer without containing HD, blocking was not found in the state of the tubular plastic film before heat sterilization, but the bag was broken during the heat sterilization at 121°C. The bag was not able to withstand the heat sterilization.

In Comparative example 3 in which LLD 1 was used in the second outer layer without containing HD, blocking was found in the state of the tubular plastic film before heat sterilization and the bag was broken during the heat sterilization at 121°C. The bag was not able to withstand the heat sterilization.

From the above results, it was found that deterioration in quality was suppressed and blocking resistance was able to be improved by application of the present invention.

### Industrial Applicability

According to the plastic film of the present invention, deterioration in the quality of the plastic film is suppressed and blocking resistance is improved.

### Description of Reference Signs

- 1: Plastic film
- 10: First outer layer
- 12: Second intermediate layer
- 14: First intermediate layer
- 16: Second outer layer
- 100: Infusion solution bag
- 110: Bag body
- 111: Spout

## Claims

1. A plastic film comprising:
a first outer layer made of a polyester elastomer;
a second outer layer containing a high-density polyethylene;
a first intermediate layer arranged between the first outer layer and the second outer layer and containing a linear low-density polyethylene as a main component; and
a second intermediate layer arranged between the first outer layer and the first intermediate layer and containing a polymer of an α-olefin and an unsaturated carboxylic acid or an anhydride monomer of an unsaturated carboxylic acid as a main component,
wherein the plastic film is produced by a co-extrusion method.

2. The plastic film according to Claim 1,
wherein the polyester elastomer of the first outer layer is an alicyclic polyester.

3. The plastic film according to Claim 1,
wherein the first intermediate layer contains the high-density polyethylene in a content of less than or equal to 40% by mass.

4. The plastic film according to Claim 1,
wherein the second outer layer is a mixture of a high-density polyethylene and a linear low-density polyethylene and contains the linear low-density polyethylene in a content of less than or equal to 50% by mass.

5. The plastic film according to Claim 1,
wherein the second outer layer is a mixture of 20 to 40% by mass of high-density polyethylene, 10 to 30% by mass of linear low-density polyethylene, 70 to 30% by mass of low-density polyethylene.

6. An infusion solution bag comprising:
a bag body made of the plastic film according to Claim 1,
wherein a spout is provided in the bag body.
